# EUROPEAN PATENT SPECIFICATION

(11) **EP 1 544 240 B1**
(45) Date of publication and mention of the grant of the patent: **23.08.2006**
(21) Application number: 04029107.2
(22) Date of filing: 08.12.2004
(51) Int. Cl.: C08K 5/3492, C08K 13/02, C08K 5/03, C08K 3/22, C08K 3/08, H01R 13/46, C08L 77/00

(54) **Flame-retardant polyamide resin composition**
Flammfeste Polyamidzusammensetzungen
Compositions de polyamides ignifugées

(30) Priority: 18.12.2003 JP 2003421518
(43) Date of publication of application: 22.06.2005
(73) Proprietor: MITSUBISHI ENGINEERING-PLASTICS CORPORATION, Tokyo (JP)
(72) Inventor: Ohyama, Hajime Mitsubishi Engineering-Plastics C., Hiratsuka-shi Kanagawa-ken (JP); Matsui, Hiromichi Mitsubishi Engineering-Plastics, Hiratsuka-shi Kanagawa-ken (JP); Maeda, Naoya Mitsubishi Engineering-Plastics Corp., Hiratsuka-shi Kanagawa-ken (JP)
(74) Representative: HOFFMANN EITLE

(56) References cited:
- EP-A- 0 139 893
- US-A- 4 548 972
- US-A- 4 606 853
- US-A- 4 789 698
- PATENT ABSTRACTS OF JAPAN vol. 003, no. 133 (C-063), 7 November 1979 (1979-11-07) & JP 54 113647 A (TOYOBO CO LTD), 5 September 1979 (1979-09-05)
- PATENT ABSTRACTS OF JAPAN vol. 1999, no. 04, 30 April 1999 (1999-04-30) & JP 11 012461 A (MITSUBISHI ENG PLAST KK), 19 January 1999 (1999-01-19)
- DATABASE CA [Online] CHEMICAL ABSTRACTS SERVICE, COLUMBUS, OHIO, US; SHEN, KELVIN K. ET AL SHEN, KELVIN K. ET AL: "Recent advances in the use of borates as fire retardants in nylons Recent advances in the use of borates as fire retardants in nylons" XP002319770 retrieved from STN Database accession no. 1998:362621 -& RECENT ADVANCES IN FLAME RETARDANCY OF POLYMERIC MATERIALS , 8, 171-183 CODEN: RAFMFH RECENT ADVANCES IN FLAME RETARDANCY OF POLYMERIC MATERIALS , 8, 171-183 CODEN: RAFMFH, 1997, XP009044677

## Description

### BACKGROUND OF THE INVENTION

The present invention relates to a flame-retardant polyamide resin composition, more particularly to the said resin composition which is capable of providing the molded products with high electrical safety, and the connectors comprising such a flame-retardant polyamide resin composition.

Connectors as an electrical and electronic part are widely used as a device for connecting the electrical and electronic circuits between or in the inside of electrical apparatus, or as a part of various industrial products such as household appliances, communications equipment, OA apparatus, computers, electronic devices for automobiles, etc., and thus they are indispensable in the field of electrical and electronic products. Flame-retardant polyamide resin compositions are popularly used as a material for producing such connectors. Recently, however, in order to secure higher electrical safety in the diversified uses of such compositions, the glow wire ignition temperature in the IEC 60695-2-13 standard was revised from "725°C or above" to "775°C or above". It is also required that the comparative tracking index in the IEC60112 standard is not less than 400 V. Consequently, it turned out that the flame-retardant polyamide resin compositions which have been generally used as a connector material can not satisfy the required levels of glow wire ignition temperature and comparative tracking index in the revised Standards.

Representative of the commonly known connector producing materials are the polyamide resin compositions comprising polyamide resins and melamine cyanurate (see, for example, Japanese Patent Application Laid-Open (KOKAI) No. 5-17683). The polyamide resin composition disclosed in this literature is an excellent resin composition that exhibits well satisfactory flame retardancy in the UL94 standard and is free from such problems as plate-out and blooming. However, the glow wire ignition temperature of the resin composition shown in the Examples of this literature is 725°C. After that, many inventions of improvement on the polyamide resin compositions have been made (see, for example, Japanese Patent Application Laid-Open (KOKAI) Nos. 9-143365, 11-12461, 11-12462, 11-26060 and 2003-49067). In these literatures, however, no mention is made of the glow wire ignition temperature that serves as a criterion for flame retardancy and the comparative tracking index that provides a standard for electrical insulating properties. Further, in the tests conducted by the present inventors, the glow wire ignition temperature of any of the polyamide resin compositions shown in the Examples of these patents was below 750°C.

### SUMMARY OF THE INVENTION

Accordingly, an object of the present invention is to provide a flame-retardant polyamide resin composition having excellent electrical insulating properties, which composition has no likelihood of causing such troubles as plate-out and blooming, excels in molding properties and mechanical strength, is not lower than 775°C in its glow wire ignition temperature and also not less than 400 V in comparative tracking index, and can provide the electrical and electronic part products such as connectors that can satisfy the revised official standards, and to provide the connectors made of such a resin composition.

As a result of the present inventors' earnest studies to attain the above object, it has been found that the above-said problems can be solved by blending in a polyamide resin the specified amounts of a triazine-based flame retardant, a bromic flame retardant, a carboxylic acid amide-based wax, and an antimony compound and/or zinc borate in a proper combination. The present invention has been attained on the basis of the above finding.

In a first aspect of the present invention, there is provided a flame-retardant polyamide resin Composition comprising 100 parts by weight of a polyamide resin, 5 to 20 parts by weight of a triazine-based flame retardant, 1 to 25 parts by weight of a bromic flame retardant, 0.001 to 2 parts by weight of carboxylic acid amide-based wax, and 0.1 to 7 parts by weight of an antimony compound and/or zinc borate.

In a second aspect of the present invention, there is provided a connector comprising a flame-retardant polyamide resin composition as defined in the above first aspect.

### DETAILED DESCRIPTION OF THE INVENTION

A detailed description of the present invention is given below. The polyamide resin used as the base material of the flame-retardant polyamide resin composition according to the present invention is a polyamide obtained by polycondensing a 3- or more-membered ring lactam, a polymerizable ω-amino acid or a dibasic acid with a diamine or the like. Specifically, such polyamides include the polymers of ε-captrolactam, aminocaproic acid, enantholactam, 7-aminoheptanoic acid, 11-aminoundecanoic acid, 9-aminononanoic acid, α-pyrrolidone, α-piperidone, etc., and the polymers obtained by polycondensing diamines such as hexamethylenediamine, nonamethylenediamine, undecamethylenediamine, dodecamethylenediamine, metaxylylenediamine, etc., and dicarboxylic acids such as terephthalic acid, isophthalic acid, adipic acid, sebacic acid, dodecanoic dibasic acid, glutaric acid, etc., and copolymers thereof.

More specifically, as examples of such polyamide resins, polyamides 4, 6, 7, 8, 11, 12, 6·6, 6·9, 6·10, 6· 11, 6·12, 6T, 6/6·6, 6/12, 6/6T, 6T/6I and MXD6 can be mentioned. Mixtures of two or more of these polyamide resins can be used. Among these polyamide resins, polyamide 6, copolymer polyamides 6/6·6, and/or polyamide 6·6 are especially preferred in view of flame retardancy, mechanical strength and molding properties of the obtained composition. These polyamide resins may be terminated in their molecular chain with a carboxylic acid or an amine which can also serve for the adjustment of molecular weight.

Especially blending of copolymer polyamide 6/66 in the polyamide resin contributes to the improvement of toughness of the molded products. Copolymer polyamide 6/66 is blended in an amount of preferably not more than 40% by weight, more preferably in the range of 20 to 40% by weight of the whole amount of polyamide resin. When using copolymer polyamide 6/66 in excess of 40% by weight, heat resistance and rigidity may deteriorate.

A triazine-based flame retardant is blended in the flame-retardant polyamide resin composition of the present invention. The triazine-based flame retardants usable in the present invention include, for example, the compounds represented by the following formulae (1) and (2), melamines and melamine cyanurates: 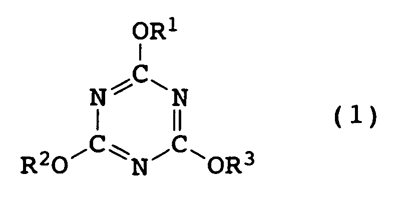 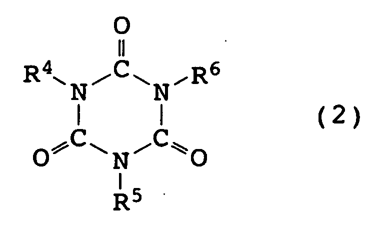 wherein R¹ to R⁶ represent respectively a hydrogen atom or an alkyl group having preferably 1 to 5, more preferably 1 to 3 carbon atoms.

Examples of the compounds represented by the formula (1) include cyanuric acid, trimethyl cyanurate, triethyl cyanurate, tri(n-propyl) cyanurate, methyl cyanurate and diethyl cyanurate. Examples of the compounds represented by the formula (2) include isocyanuric acid, trimethyl isocyanurate, triethyl isocyanurate, tri(n-propyl) isocyanurate, diethyl isocyanurate and methyl isocyanurate.

The melamines usable in the present invention include melamine, melamine derivatives, the compounds having a structure analogous to melamine, and melamine condensates. The more specific examples of such melamines are melamine, ammelide, ammeline, formoguanamine, guanylmelamine, cyanomelamine, arylguanamine, melam, melem and mellon.

As melamine cyanurate, for example, an equimolar reaction product of cyanuric acid and melamine is exemplified. Some of the amino groups or hydroxyl groups in melamine cyanurate may be replaced by other substituent groups. Such melamine cyanurate can be obtained, for example, by mixing an aqueous solution of cyanuric acid and an aqueous solution of melamine, reacting the mixture with stirring at 90 to 100°C, and filtering the produced precipitate. Melamine cyanurate is a white solid, which is preferably used in the form of fine powder. It is of course possible to use a commercial product, either in the form as it is or after pulverization.

As the triazine-based flame retardant, cyanuric acid, isocyanuric acid, melamine, melamine cyanurate, melem cyanurate and the like are preferably used. Equimolar reaction products of cyanurates (such as melamine cyanurate) and melamines are especially preferred as they have no likelihood of causing blooming, or exudation of the decomposed material on the surface of the molded product.

The amount of the triazine-based flame retardant to be blended is 5 to 20 parts by weight, preferably 6 to 18 parts by weight based on 100 parts by weight of the polyamide resin. When the amount of the triazine-based flame retardant blended is less than 5 parts by weight, the glow wire ignition temperature of the composition in the IEC60695-2-13 standard falls short of 775°C. When the amount of the said flame retardant blended exceeds 20 parts by weight, in the flame retardancy test under the UL94 standard, the liquid droplets may fall without being perfectly extinguished during dripping, making it unable for the composition to maintain its properties in use as a connector.

In the flame-retardant polyamide resin composition according to the present invention, a bromic flame retardant is blended along with a triazine-based flame retardant. Blending of a bromic flame retardant realizes a drastic improvement of the glow wire ignition temperature characteristics of the polyamide resin composition in the IEC60695-2-13 standard.

As the bromic flame retardant, there can be used, for example, aromatic bromine compounds, brominated epoxy resins, brominated polycarbonates, brominated aromatic vinyl copolymers, brominated cyanurate resins, brominated polyphenylene ethers and the like. More specific examples thereof are ethylene-bispentabromobenzene, decabromodiphenyl oxide, 1,2(pentabromophenyl)-ethane, pentabromobenzyl polyacrylate, tetrabromobisphenol A, oligomers of tetrabromobisphenol A, brominated bisphenolic epoxy resins, brominated bisphenolic phenoxy resins, brominated bisphenolic polycarbonates, brominated polystyrene, brominated crosslinked polystyrene, brominated polyphenylene oxide, polydibromophenylene oxide, decabromodiphenyl oxide-bisphenol condensate, and halogenophosphoric esters.

The bromine content in the bromic flame retardant is preferably not less than 60%, more preferably not less than 80%. As the bromic flame retardant with a bromine content of not less than 80%, ethylene-bispentabromobenzene is preferred. Such a bromic flame retardant is used in an amount of 1 to 25 parts by weight, preferably 2 to 23 parts by weight to 100 parts by weight of the polyamide resin. If the amount of the bromic flame retardant blended is less than 1 part by weight, it is unable to produce the desired effect of improving the glow wire ignition temperature characteristics in the IEC60695-2-13 standard. If its amount exceeds 25 parts by weight, the comparative tracking index in the IEC60112 Standards lowers to deteriorate electrical insulating properties. Also, drip characteristics worsen to lower flame retardancy in the UL94 standard, and further mechanical properties tend to be degraded.

In the flame-retardant polyamide resin composition according to the present invention, an antimony compound and/or zinc borate are also blended. Blending of an antimony compound and zinc borate has the effect of enhancing flame retardancy of the composition, and particularly, by blending zinc borate, an additional effect of improving the comparative tracking index can be provided. As examples of the antimony compounds usable in the present invention, antimony trioxide and antimony pentoxide can be mentioned, antimony trioxide being especially preferred.

The amount of the antimony compound or zinc borate blended or the combined amount of the antimony compound and zinc borate blended is 0.1 to 7 parts by weight, preferably 0.3 to 7 parts by weight, more preferably 0.5 to 6 parts by weight based on 100 parts by weight of the polyamide resin. When the amount of the antimony compound and/or zinc borate is less than 0.1 part by weight, the effect of improving flame retardancy in the UL94 standard is unsatisfactory. When its (or their combined) amount exceeds 8 parts by weight, the drip characteristics worsen to invite deterioration of not only flame retardancy in the UL94 standard but also mechanical properties of the composition. When an antimony compound alone is used in an amount exceeding 8 parts by weight, the comparative tracking index lowers.

The amounts of the triazine-based flame retardant, bromic flame retardant, antimony compound and/or zinc borate to be blended in the polyamide resin composition of the present invention are optimally selected within the above-defined ranges according to the required performance of the product by taking into account the merits and demerits of the respective components. Merits and demerits of the respective components are as follows. The triazine-based flame retardant contributes greatly effective for the improvement of flame retardancy in the UL94 standard but has a tendency to badly deteriorate the mechanical properties of the composition when this agent is added in a large amount. The bromic flame retardant is effective for the improvement of the glow wire ignition temperature characteristics in the IEC60695-2-13 standard but has a tendency to lower the comparative tracking index in the IEC60112 standard when it is blended in a large amount. The antimony compound is effective for the improvement of flame retardancy in the UL94 standard but has a tendency to lower the comparative tracking index when this compound is used in an excess amount. Zinc borate, although less effective than the antimony compound, contributes to the improvement of flame retardancy in the UL94 standard and has a remarkable effect in improving the comparative tracking index to enhance electrical insulating properties of the composition. It is also notable that if the amounts of the bromic flame retardant, antimony compound and zinc borate exceed the above-defined ranges, the drip characteristics worsen to deteriorate flame retardancy in the UL94 Standards as well as mechanical properties of the composition.

In the flame-retardant polyamide resin composition of the present invention, the viscosity number of the polyamide resin is usually 80 to 180. However, in the composition of the present invention, the relation between the preferred amounts of the component materials, viz. a triazine-based flame retardant, a bromic flame retardant, an antimony compound and/or zinc borate, and the degree of polymerization (viscosity number) of the polyamide resin varies depending on whether importance is given to flame retardancy in the UL94 standard, with a 0.8 mm thick test piece being required to maintain combustibility of the level V-0, or importance is attached to mechanical properties, with the UL94 standard flame retardancy being allowed to be of the level V-2. Hereinafter, the polymerization degree of the polyamide resin determined according to JIS K6933-1999 using 99% concentrated sulfuric acid under the conditions of 1 wt% resin concentration and 23°C is expressed as viscosity number.

In case where importance is given to flame retardancy of the resin composition in the UL94 standard, with the 0.8 mm thick test piece being required to maintain combustibility of the level V-0, the viscosity number of the polyamide resin is preferably 80 to 130, more preferably 90 to 130. When the viscosity number is less than 80, mechanical properties deteriorate, and when it exceeds 130, drip characteristics worsen, making it hardly possible to maintain flame retardancy at the level V-0. In case where flame retardancy of the resin composition needs to be maintained at the level V-0, the preferred amounts of the component materials based on 100 parts by weight of the polyamide resin are as follows: triazine-based flame retardant = 7 to 18 parts by weight; bromic flame retardant = 1 to 8 parts by weight; antimony compound and/or zinc borate = 0.5 to 6 parts by weight. In a particularly preferred embodiment, triazine-based flame retardant is 9 to 15 parts by weight, bromic flame retardant is 2 to 6 parts by weight, and antimony compound and/or zinc borate is 1 to 5 parts by weight, based on 100 parts by weight of the polyamide resin.

In case where importance is given to mechanical properties of the resin composition and flame retardancy of a 0.8 mm thick test piece may be of the level V-2 in the combustion test, the viscosity number of the polyamide resin is preferably over 130 but not more than 180, more preferably 140 to 170. When the viscosity number is less than 130, it is hardly possible to obtain well satisfactory mechanical properties, and when the viscosity number exceeds 180, the composition is worsened in melt fluidity and becomes unsuited for molding of the products such as connectors. Also, in this case, the preferred amounts of the component materials based on 100 parts by weight of the polyamide resin are as follows: triazine-based flame retardant = 5 to 20, especially 8 to 16 parts by weight; bromic flame retardant = 8 to 25, especially 9 to 22; antimony compound and/or zinc borate = 0.5 to 8, especially 0.5 to 6 parts by weight.

In the flame-retardant polyamide resin composition according to the present invention, it is possible to blend pigment, dye, nucleating agent, release agent, stabilizer, antistatic agent and various other known additives within limits not affecting the composition's glow wire ignition temperature in the IEC60695-2-13 standard, comparative tracking index in the IEC60112 standard, flame retardancy in the UL94 standard, and mechanical properties. It is to be noted, however, that if a reinforcing agent is blended in the composition of the present invention, tensile elongation may be adversely affected resulting in a reduced toughness of the finally obtained composition and an increased risk of causing troubles such as lock break of the product connector or a reduction of hinge effect. Therefore, it is preferable to contain substantially no reinforcing agent in the flame-retardant polyamide resin composition of the present invention.

Tensile strength of the resin composition according to the present invention is usually not less than 50 MPa, preferably not les than 60 MPa. Tensile elongation of the resin composition according to the present invention is usually not less than 4%. When the tensile strength and tensile elongation is too low, the connector made of the obtained composition proves to be unsatisfactory in strength in practical use.

Further, in the flame-retardant polyamide resin composition of the present invention, a carboxylic acid amide-based wax is contained as a release agent in an amount of 0.001 to 2 parts by weight, preferably 0.005 to 0.3 parts by weight to 100 parts by weight of the polyamide resin. This wax is of use for enhancing productivity when molding the products by injection molding without reducing the glow wire ignition temperature, comparative tracking index and flame retardancy (UL94 standard) of the product connectors. "Carboxylic acid amide-based wax" is a wax obtained from a dehydration reaction of a diamine and a mixture of a higher aliphatic monocarboxylic acid and a polybasic acid.

The higher aliphatic monocarboxylic acid used in the present invention is preferably selected from the saturated aliphatic monocarboxylic acids and hydroxycarboxylic acids with a carbon number of not less than 16, for example, palmitic acid, stearic acid, behenic acid, montanoic acid and 12-hydroxystearic acid. As the polybasic acid, di- or higher basic carboxylic acids, for example, aliphatic dicarboxylic acids such as malonic acid, succinic acid, adipic acid, sebacic acid, pimelic acid and azelaic acid, aromatic dicarboxylic acids such as phthalic acid and terephthalic acid, and alicyclic dicarboxylic acids such as cyclohexanedicarboxylic acid and cyclohexylsuccinic acid can be used. The diamines usable in the present invention include, for example, ethylenediamine, 1,3-diaminopropane, 1,4-diaminobutane, hexamethylenediamine, metaxylenediamine, tolylenediamine, paraxylenediamine, phenylenediamine and isophoronediamine.

Concerning the carboxylic acid amide-based wax, it is possible to obtain the wax of any desired softening temperature by properly changing the mixing ratio of the polybasic acid to the higher aliphatic monocarboxylic acid used in the preparation of the wax. The mixing ratio of the polybasic acid is preferably 0.18 to 1.0 mole to 2 moles of the higher aliphatic monocarboxylic acid. The amount of the diamine used is preferably 1.5 to 2.0 moles to 2 moles of the higher aliphatic monocarboxylic acid. It can be properly changed in accordance with the amount of the polybasic acid used.

As the carboxylic acid amide-based wax used in the present invention, the one obtained by reacting one mole of a polybasic acid and 2 moles of a diamine with 2 moles of a higher aliphatic carboxylic acid is especially preferred.

As for the method of blending a triazine-based flame retardant, a bromic flame retardant, an antimony compound and/or zinc borate in the base polyamide resin, it is possible to use the various known methods in which the said components may be blended at any stage in the process up to the point just before the objective molded product is produced from the resin composition. For instance, the following methods can be used: (1) A triazine-based flame retardant, a bromic flame retardant, an antimony compound and/or zinc borate are simply dry blended with a polyamide resin, and the dry blend is melt kneaded and pelletized; (2) Master pellets are prepared in advance by incorporating the more-than-predetermined amounts of a triazine-based flame retardant, a bromic flame retardant, an antimony compound and/or zinc borate in a polyamide resin of the same type as the one used as the molding material, and these master pellets are dry blended with the polyamide resin used as the molding material. In case where melt kneading is conducted in the course of blending, it is preferable to adjust the resin temperature so as not to exceed 290°C. If the resin temperature exceeds 290°C, the flame retardants and/or other components may be decomposed and it may be difficult to attain the objective flame retardancy and electrical insulating properties in the present invention.

For producing the desired molded product such as connector using the flame-retardant polyamide resin composition of the present invention, the said dry blend or pelletized polyamide resin composition is molded by a known molding method such as injection molding or extrusion molding. In case where the objective product is connectors, they can be produced at high productivity by injection molding.

The flame-retardant polyamide resin composition according to the present invention and the connectors made of such a resin composition can produce the particularly advantageous practical effects such as mentioned below, and their industrial utilization value is very high.
1. The flame-retardant polyamide resin composition according to the present invention excels in flame retardancy and electrical insulating properties. Particularly, its 3 mm thick test piece shows a glow wire ignition temperature of not lower than 775°C and is up to the revised IEC60695-2-13 standard. It also has a comparative tracking index of not less than 400 V, which conforms to the revised IEC60112 standard.
2. The flame-retardant polyamide resin composition according to the present invention has excellent flame retardancy, and its 0.8 mm thick test piece shows, in the combustion test, flame retardancy of the level V-0 in the UL-94 standard or the level V-2 which endorses good mechanical properties of the composition.
3. The flame-retardant polyamide resin composition according to the present invention is free from such troubles as plate-out and blooming, so that it can provide the products with good appearance.
4. The flame-retardant polyamide resin composition according to the present invention also excels in molding properties (release properties of the molded product), so that the productivity in the production of the molded products using this composition is high.
5. The polyamide resin composition according to the present invention can be utilized as a material for producing a wide variety of electrical and electronic parts such as connectors.
6. The connectors comprising the flame-retardant polyamide resin composition according to the present invention excel in flame retardancy and electrical insulation, ensure high safety in use and are useful as a device for connecting electrical and electronic circuits between or in the electrical apparatus.

The flame-retardant polyamide resin composition according to the present invention, as explained in detail above, has high electrical safety because of its excellent flame retardancy and electrical insulating properties and is useful as a material for connectors used widely as a device for connecting electrical and electronic circuits between and in the electrical apparatus and as a part of household appliances, communication equipment, OA apparatus, computers, electronic devices for automobiles, etc. Also, the connectors provided by the present invention are of a structure that allows insertion of a plurality of electrical wires or cables into the connectors, and the connectors having the electrical wires or cables inserted therein are capable of fixing the electrical wires or cables in position with high safety electrically.

### EXAMPLES

The present invention is explained in further detail hereinbelow with reference to the examples thereof, which examples, however, are merely intended to be illustrative and not to be construed as limiting the scope of the invention. Details such as properties of the respective component materials used in the following Examples are as described below. The evaluation tests on the resin compositions comprising these component materials and the products obtained therefrom were conducted by the methods described below.
Materials used:
(A-1) PA6 (100): Polyamide 6 with a viscosity number of 100
(A-2) PA6 (120): Polyamide 6 with a viscosity number of 120
(A-3) PA6 (180): Polyamide 6 with a viscosity number of 180
(A-4) PA66 (120): Polyamide 66 with a viscosity number of 120
(A-5) PA66 (150): Polyamide 66 with a viscosity number of 150
(A-6) PA6/66 (120): Copolymer polyamide 6/66 (66 content: 15 wt%) with a viscosity number of 120
(A-7) PA6/66 (180): Copolymer polyamide 6/66 (66 content: 20 wt%) with a viscosity number of 180
(B) MX44: A triazine-based flame retardant (melamine cyanurate available from Mitsubishi Chemical Corporation under the trade name of MX44)
(C) A bromic flame retardant (ethylene-bispentabromobenzene)
(D-1) MIC-3: Antimony trioxide (available from Moriroku Company Ltd. under the trade name of MIC-3)
(D-2) ZB: Zinc borate (available from Borax Co., Ltd. under the trade name of Firebreak ZB
(E) WH255: A carboxylic acid amide-based wax release agent (polycondensate of 2 moles of stearic acid, 1 mole of azipic acid and 2 moles of hexamethylenediamine; available from Kyoeisha Chemical Co., Ltd., under the trade name of WH255)
Properties evaluation methods:
(1) Viscosity number
   Measured according to JIS K6933-1999 using 96% concentrated sulfuric acid as solvent under the conditions of 1 wt% resin concentration and 23°C.
(2) Glow wire ignition temperature (°C)
   Measured according to IEC60695-2-13 standard on the 3 m thick test pieces.
(3) Comparative tracking index
   Measured according to IEC60112 standard on the 3 mm thick test pieces.
(4) Flame retardancy
   Measured according to UL-94 standard using the 0.8 mm thick test pieces. In rating of flame retardancy in this test, "V-0" indicates a satisfactory level of flame retardancy, with "V-2" inferior to "V-0".
(5) Tensile strength and tensile elongation
   Using the 1 mm thick ASTM4 test pieces, a tensile test was conducted at a rate of pulling of 5 mm/min.
(6) Molding properties
   Connectors were molded by an injection molding machine (Type J75ED mfd. by Japan Steel Works, Ltd.) using an injection mold for molding connectors (32 pieces of connector in one round of molding operation, overall weight of moldings: 35 g, weight of one piece of connector: 0.8 g) at a cycle of 0.4-second injection and 4-second cooling. The molding properties (release properties of the product) were judged according to whether the product connectors remained in the mold cavity or not.

### Examples 1 to 10 and Comparative Examples 1 to 7

Polyamide resins and other component materials were mixed in the ratios shown in Table 1 (in the table, "parts" are by weight) by a tumbling mixer. The obtained mixtures were melted and kneaded by a double-screw extruder (Type TEX30HCT, 30 mmφ, mfd. by Japan Steel Works, Ltd.) under the conditions of cylinder temperature = 240°C; screw speed = 200 rpm; discharge rate = 15 kg/h, and pelletized. Viscosity number of the base polyamide resins comprising plural types of polyamide was determined with the pelletized version. In the evaluation tests of glow wire ignition temperature, comparative tracking index, flame retardancy (UL-94 standard) and tensile elongation, there were used the test pieces molded to suit the respective test items from the obtained pellets by an injection molding machine (Type Y75ED mfd. by Japan Steel Works, Ltd.) at a cylinder temperature of 270°C. Evaluation results are shown in Table 1. In the examination of molding properties, no product connectors made by using the resin compositions of Examples 2 to 10 remained in the mold cavity, indicating excellent molding properties of these compositions, while the connectors made by using the resin compositions of Comparative Examples 1 to 7 remained in the mold cavity, demonstrating unsatisfactory molding properties of these comparative compositions.

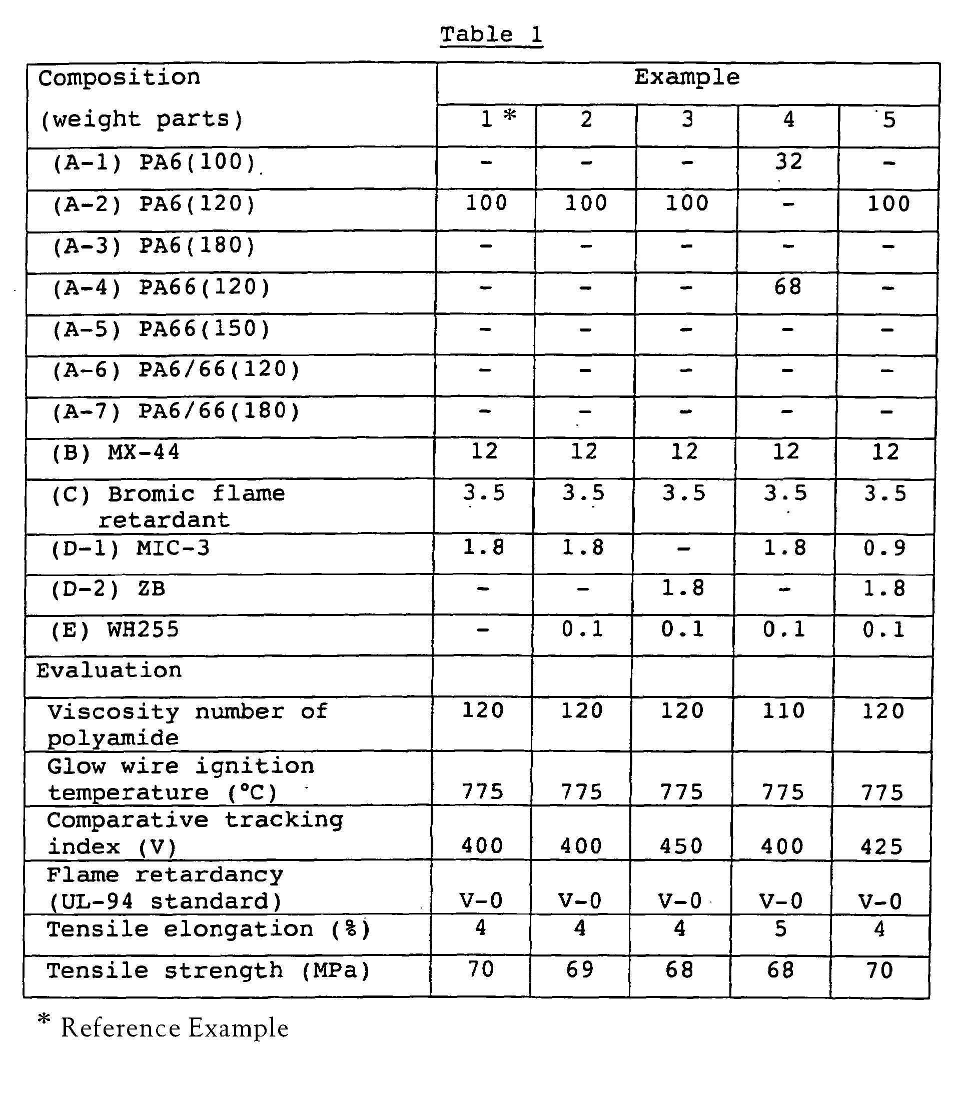

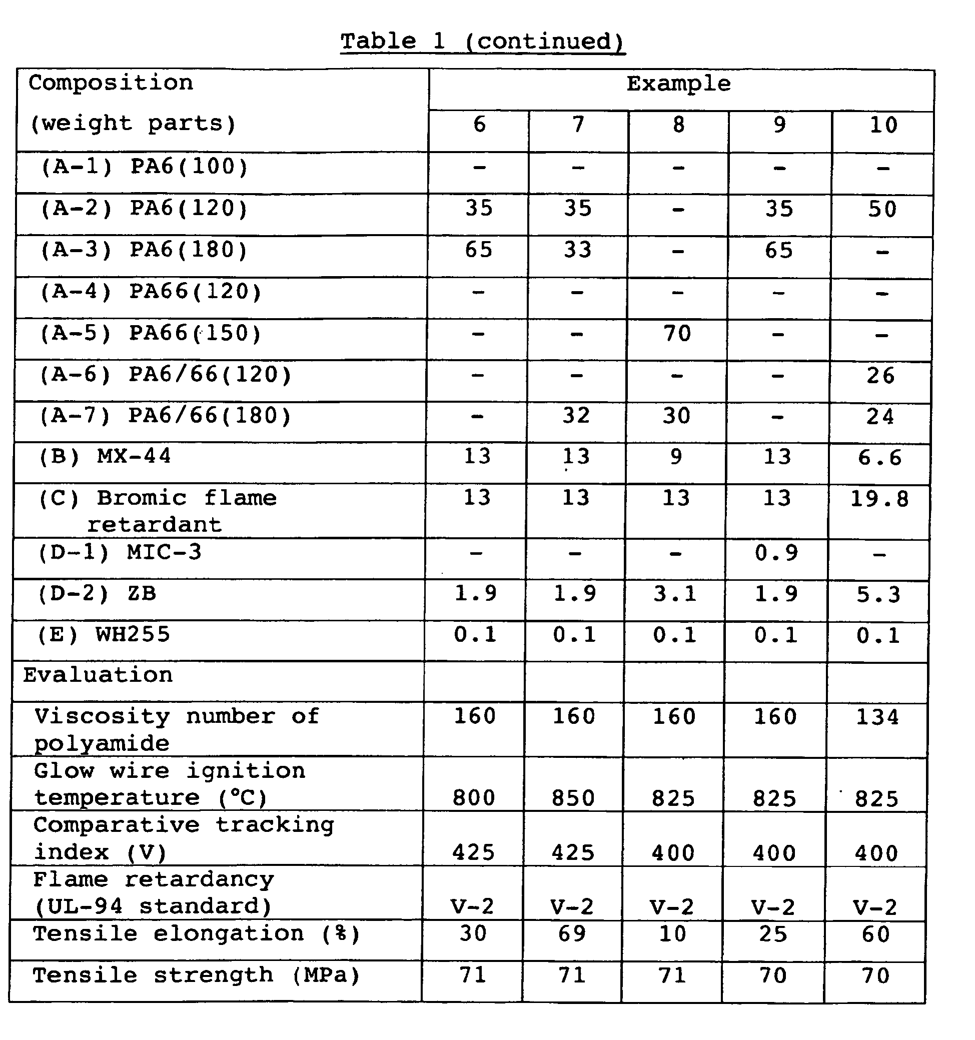

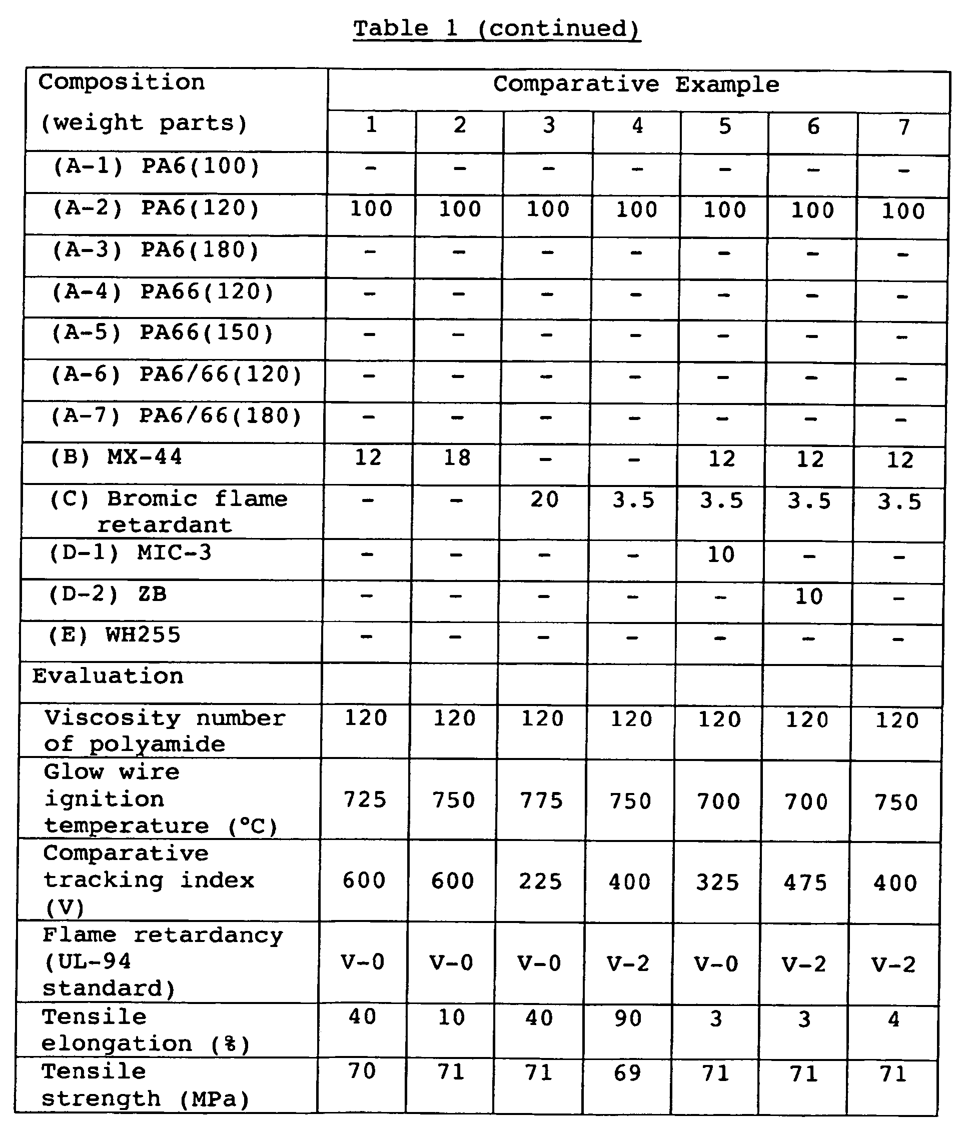

The following facts are evident from Table 1.
1. The molded products obtained from the flame-retardant polyamide resin composition according to the present invention show a glow wire ignition temperature of not lower than 775°C and a comparative tracking index of not less than 400 V, so that they meet the revised IEC standard requirements. (See Examples 1 to 10).
2. The molded products obtained from this resin composition excel in flame retardancy, with its flame retardancy being of the level of V-0 in the UL-94 standard when the viscosity number of the polyamide resin used is 110 to 120 which is embraced within the range of 80 to 130 defined in the present invention. (See Examples 1 to 5.)
3. The molded products obtained form the flame-retardant polyamide resin composition according to the present invention show flame retardancy of the level V-2 in the UL-94 standard but have good mechanical properties when the viscosity number of the polyamide resin used is 160 which is within the range of 80 to 130 defined in the present invention. (See Examples 6 to 10.)
4. As viewed above, the resin composition according to the present invention, by virtue of blending of the specified amounts of a triazine-based flame retardant, a bromic flame retardant, and an antimony compound and/or zinc borate in a polyamide resin, can reach the target levels of flame retardancy, glow wire ignition temperature and comparative tracking index. (See Examples 1 to 5.)
5. The flame-retardant polyamide resin composition according to the present invention is strikingly improved in molding properties when a carboxylic acid amide-based wax is blended. (See Examples 2 to 10.)
6. The molded products obtained from the resin compositions of Comparative Examples 1 and 2 where a bromine-based flame retardant, an antimony compound and/or zinc borate are not contained show a glow wire ignition temperature of 725°C and 750°C, respectively, and can not meet the revised IEC standard requirements.
7. The molded products obtained from the resin compositions of Comparative Examples 3 and 4 where a bromine-based flame retardant alone is contained as the flame retardant or neither antimony compound nor zinc borate is blended show a glow wire ignition temperature of 775°C, barely conforming to the revised IEC standard, but their comparative tracking index is 225 V, not conforming to the revised IEC standard, when the bromic flame retardant is added in excess of the range specified in the present invention. They also show a glow wire ignition temperature of 750°C, which is below the passing mark of the revised IEC standard, when the amount of the bromic flame retardant blended is in the range defined in the present invention.
8. The molded products obtained from the resin compositions of Comparative Examples 5, 6 and 7 where the amount of antimony compound and/or zinc borate is out of the range defined in the present invention, show a glow wire ignition temperature of 750°C and are not conforming to the revised IEC standard.

## Claims

1. A flame-retardant polyamide resin Composition comprising:
100 parts by weight of a polyamide resin,
5 to 20 parts by weight of a triazine-based flame retardant,
1 to 25 parts by weight of a bromic flame retardant,
0.1 to 7 parts by weight of an antimony compound and/or zinc borate, and
0.001 to 2 parts by weight of a carboxylic acid amide-based wax.

2. A flame-retardant polyamide resin composition according to Claim 1, wherein the viscosity number of the polyamide resin is 80 to 180.

3. A flame-retardant polyamide resin composition according to any one of Claim 1 or 2, wherein substantially no reinforcing agent is contained.

4. A flame-retardant polyamide resin composition according to any one of Claims 1 to 3, wherein a 3 mm thick test piece made of said resin composition shows a glow wire ignition temperature of not lower than 775°C in the IEC60695-2-13 standard, and a comparative tracking index of not less than 400 V in the IEC60112 standard.

5. A flame-retardant polyamide resin composition according to Claim 1, wherein the viscosity number of the polyamide resin is 80 to 130.

6. A flame-retardant polyamide resin composition according to Claim 5, wherein a 0.8 mm thick test piece made of said resin composition shows flame retardancy of the level V-0 in the UL-94 standard.

7. A flame-retardant polyamide resin composition according to Claim 1, wherein the viscosity number of the polyamide resin is not less than 130 but not more than 180.

8. A flame-retardant polyamide resin composition according to Claim 7, wherein a 0.8 mm thick test piece made of said resin composition shows flame retardancy of the level V-2 in the UL-94 standard.

9. A connector comprising a flame-retardant polyamide resin composition as defined in any one of Claims 1 to 8.

## Patentansprüche

1. Flammfeste Polyamidharzzusammensetzung, die folgendes umfaßt:
100 Gew.Anteile eines Polyamidharzes,
5 bis 20 Gew.Anteile eines Flammschutzmittels auf Triazinbasis,
1 bis 25 Gew.Anteile eines bromhaltigen Flammschutzmittels,
0,1 bis 7 Gew.Anteile einer Antimonverbindung und/oder Zinkborat und
0,001 bis 2 Gew.Anteile eines Wachses auf Basis eines Carbonsäureamids.

2. Flammfeste Polyamidharzzusammensetzung gemäß Anspruch 1, worin die Viskositätszahl des Polyamidharzes 80 bis 180 beträgt.

3. Flammfeste Polyamidharzzusammensetzung gemäß mindestens einem der Ansprüche 1 oder 2, worin im wesentlichen kein Verstärkungsmittel enthalten ist.

4. Flammfeste Polyamidharzzusammensetzung gemäß mindestens einem der Ansprüche 1 bis 3, worin ein 3 mm dicker Probekörper, der aus der Harzzusammensetzung hergestellt ist, eine Glühdraht-Entzündungstemperatur von weniger als 775°C nach dem Standard IEC60695-2-13 und eine Kriechwegzahl von weniger als 400 V nach dem Standard IEC60112 aufweist.

5. Flammfeste Polyamidharzzusammensetzung gemäß Anspruch 1, worin die Viskositätszahl des Polyamidharzes 80 bis 130 beträgt.

6. Flammfeste Polyamidharzzusammensetzung gemäß Anspruch 5, worin ein 0,8 mm dicker Probekörper, der aus der Harzzusammensetzung hergestellt ist, einen Flammschutz vom Grad V-0 nach dem Standard UL-94 aufweist.

7. Flammfeste Polyamidharzzusammensetzung gemäß Anspruch 1, worin die Viskositätszahl des Polyamidharzes nicht weniger als 130 und nicht mehr als 180 beträgt.

8. Flammfeste Polyamidharzzusammensetzung gemäß Anspruch 7, worin ein 0,8 mm dicker Probekörper, der aus der Harzzusammensetzung hergestellt ist, einen Flammschutz vom Grad V-2 nach dem Standard UL-94 aufweist.

9. Steckervorrichtung, die eine flammfeste Polyamidharzzusammensetzung wie in mindestens einem der Ansprüche 1 bis 8 definiert umfaßt.

## Revendications

1. Composition de résine de polyamide d'agent retardateur d'inflammation, comprenant :
100 parties en poids d'une résine de polyamide,
de 5 à 20 parties en poids d'un agent retardateur d'inflammation dérivé de triazine,
de 1 à 25 parties en poids d'un agent retardateur d'inflammation bromé,
de 0,1 à 7 parties en poids d'un composé de l'antimoine et/ou de borate de zinc, et
de 0,001 à 2 parties en poids d'une cire à base d'amide d'acide carboxylique.

2. Composition de résine de polyamide d'agent retardateur d'inflammation selon la revendication 1, dans laquelle l'indice de viscosité de la résine de polyamide et de 80 à 180.

3. Composition de résine de polyamide d'agent retardateur d'inflammation selon la revendication 1 ou 2, ne contenant presque pas d'agent de renforcement.

4. Composition de résine de polyamide d'agent retardateur d'inflammation selon l'une quelconque des revendications 1 à 3, dans laquelle une éprouvette de 3 mm d'épaisseur réalisée en ladite composition à base de résine, révélant une température d'inflammation par fil métallique incandescent, non inférieure à 775 °C selon la norme IEC60695-2-13, et un indice de conduction relatif de pas moins de 400 V selon la norme IEC60112.

5. Composition de résine de polyamide d'agent retardateur d'inflammation selon la revendication 1, dans laquelle l'indice de viscosité de la résine de polyamide et de 80 à 130.

6. Composition de résine de polyamide d'agent retardateur d'inflammation selon la revendication 5, dans laquelle une éprouvette de 0,8 mm d'épaisseur réalisée en ladite composition à base de résine, révélant un pouvoir de retardement d'inflammation du niveau V-0 selon la norme UL-94.

7. Composition de résine de polyamide d'agent retardateur d'inflammation selon la revendication 1, dans laquelle l'indice de viscosité de la résine de polyamide n'est pas inférieur à 130, mais non supérieur à 180.

8. Composition de résine de polyamide d'agent retardateur d'inflammation selon la revendication 7, dans laquelle une éprouvette de 0,8 mm d'épaisseur réalisée en ladite composition à base de résine, révélant un pouvoir de retardement d'inflammation du niveau V-2 selon la norme UL-94.

9. Connecteur comprenant une composition de résine de polyamide d'agent retardateur d'inflammation telle que définie dans l'une quelconque des revendications 1 à 8.
